# EUROPEAN PATENT APPLICATION

(11) **EP 2 466 820 A1**
(43) Date of publication of application: **20.06.2012**
(21) Application number: 10847294.5
(22) Date of filing: 01.12.2010
(51) Int. Cl.: H04L 12/56

(54) **SERVICE PROVIDING METHOD AND ACCESS GATEWAY**

(30) Priority: 11.03.2010 CN 201010124964
(71) Applicant: Huawei Technologies Co., Ltd., Shenzhen, Guangdong 518129 (CN)
(72) Inventor: WANG, Lin, Shenzhen Guangdong 518129 (CN)
(74) Representative: Körber, Martin Hans
(86) International application number: PCT/CN2010/079330
(87) International publication number: WO 2011/110036

(57) **Abstract**

Embodiments of the present invention provide a service providing method and an access gateway. The method includes: obtaining a network capability product and service level agreement SLA information that corresponds to the network capability product; authenticating, according to the network capability product and the SLA information that corresponds to the network capability product, an SP that uses the network capability product for access; and allowing the SP to provide a service for a terminal user if the authentication is successful.

## Description

### FIELD OF THE INVENTION

The present invention relates to the field of communications, and in particular, to a service providing method and an access gateway.

### BACKGROUND OF THE INVENTION

In conventional communication service, for example, in a value-added service, an SP (Service Provider) applies to an operator for access, and the operator allocates resources to the SP, so as to enable the SP to develop and operate a service. At this situation, neither the SP nor the operator has accurate information and expectation about final operating revenue. After applying for the access, the SP develops the service and performs service deployment. A mobile phone terminal user uses the service of the SP through an operator network. In the process of using the service by the user, an operator system charges the user a fee and generates a bill. After the SP delivers the service to the terminal user, the operator transfers some service use fee charged from the terminal user to the SP.

During implementation of the present invention, the inventor finds that the prior art at least has the following problems. In an existing technical solution, a service development period of an operator is too long, which is not beneficial for the SP to rapidly develop a service. In an existing manner, each time an SP implements a service (for example, a service of sending a newspaper to a user through a multimedia message, a service of sending promotion shopping information to a user through a multimedia message, and so on), the SP needs to perform an application at an operator side, deploy data, such as service data, access data and an SLA (Service Level Agreement), to an access gateway of the operator, then test connectivity, and then start operating the service officially. Since each time the service must be deployed, the development and go-live period is long, which is not beneficial to the SP to develop a service and make the service go live rapidly.

### SUMMARY OF THE INVENTION

Embodiments of the present invention provide a service providing method and an access gateway, being beneficial for an SP to rapidly implement a service, or, reducing a waste of communication resources in a process of providing the service.

In one aspect, an embodiment of the present invention provides a service providing method, including: obtaining a network capability product and service level agreement SLA information that corresponds to the network capability product; authenticating, according to the network capability product and the SLA information that corresponds to the network capability product, an SP that uses the network capability product for access; and allowing the SP to provide a service for a terminal user if the authentication is successful.

In another aspect, an embodiment of the present invention provides an access gateway, where the access gateway includes: an obtaining unit, configured to obtain a network capability product and service level agreement SLA information that corresponds to the network capability product; an authentication unit, configured to authenticate, according to the network capability product and the SLA information that corresponds to the network capability product, an SP that uses the network capability product for access; and a service unit, configured to allow the SP to provide a service for a terminal user if the authentication unit performs the authentication successfully. The aforementioned technical solutions have the following beneficial effect. Since technical measures of obtaining a network capability product and service level agreement SLA information that corresponds to the network capability product, authenticating, according to the network capability product and the SLA information that corresponds to the network capability product, an SP that uses the network capability product for access, and allowing the SP to provide a service for a terminal user if the authentication is successful are taken, the technical effect of being beneficial for the SP to rapidly implement the service is achieved. Through the method, in one aspect, it is unnecessary to perform complex configuration for service access at a network side; and in another aspect, the information amount of the set SLA is greatly reduced, thereby reducing a waste of communication resources in the process of providing the service.

### BRIEF DESCRIPTION OF THE DRAWINGS

To illustrate the technical solutions according to the embodiments of the present invention or in the prior art more clearly, the accompanying drawings for describing the embodiments or the prior art are introduced briefly in the following. Apparently, the accompanying drawings in the following description are only some embodiments of the present invention, and persons of ordinary skill in the art can derive other drawings from the accompanying drawings without creative efforts.
FIG. 1 is a flowchart of a service providing method according to an embodiment of the present invention;
FIG. 2 is a schematic diagram of an association relationship of a key data model according to the embodiment of the present invention;
FIG. 3 is a schematic structural diagram of an access gateway according to an embodiment of the present invention;
FIG. 4 is a schematic structural diagram of another access gateway according to the embodiment of the present invention; and
FIG. 5 is a schematic diagram of a network layout of an access gateway according to the embodiment of the present invention.

### DETAILED DESCRIPTION OF THE EMBODIMENTS

The technical solutions of embodiments of the present invention will be clearly and completely described in the following with reference to the accompanying drawings. It is obvious that the embodiments to be described are only a part rather than all of the embodiments of the present invention. All other embodiments obtained by persons skilled in the art based on the embodiments of the present invention without creative effects shall fall within the protection scope of the present invention.

### Embodiment 1

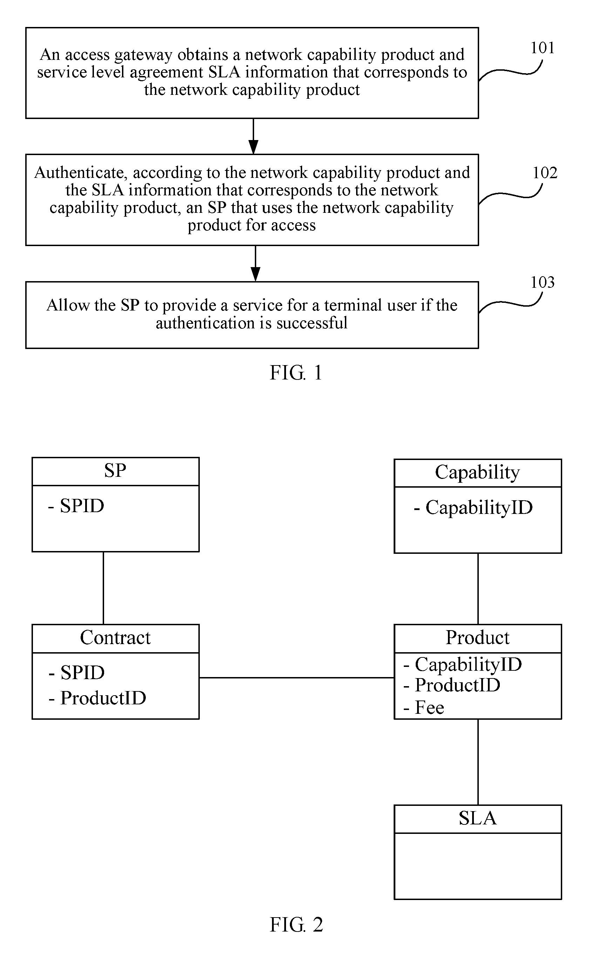

FIG. 1 is a flowchart of a service providing method according to an embodiment of the present invention. The method includes:
101: Obtain a network capability product and SLA information that corresponds to the network capability product.

The network capability product is generally a network capability product subscribed-to by an SP from an operator.

Optionally, the network capability product includes one or more of the following products: a capability product for sending a short message, a capability product for sending a multimedia message, a capability product for pushing a PUSH message, and a capability product for querying a terminal user current status. Definitely, the network capability product may also be a network capability product of another type, which is not limited by the embodiment of the present invention herein. The operator may pack, define, and control the product subscribed-to by the SP. First, the following terms are defined for clearance, as described in Table 1.

**Table 1 List of term definitions**

| **Term** | **Term Description** |
|---|---|
| Capability | A network communication capability of an operator is referred to as a Capability, such as a capability of sending a short message, a capability of sending a multimedia message, a capability of delivering a wap push, and a capability of querying a current status of a user mobile phone (whether the user mobile phone is switched on, and so on). A type of capability is just a Capability. The operator eventually packs the Capability into a product and sells the product to an SP. Each Capability has a primary key identifier: capabilityID. |
| SLA | An SLA is an abbreviation of a Service Level Agreement. In the embodiments of the present invention, the SLA indicates an SLA set for a Capability. For example, for a capability of sending a short message, an SLA of delivering at most 100 short messages every second may be set, and for multimedia messages, an SLA of delivering a maximum of 200 multimedia messages every day may be set. The SLA is a constraint range directed to a Capability. During packing a product, a capability range of a Capability included in the product may be controlled. |
| Product | After an SLA is set for a Capability, a fee price is defined, for example, 5 yuan/month, thereby forming a Capability product. Each Product has a primary key identifier: productID. |
| SP | A Service Provider, which is a role that subscribes to and uses a Capability of an operator. Each SP may have a primary key identifier: SPID. |
| Contract | After an SP subscribes to a Product, a Contract is used to establish an association relationship between the SP and the Product. |

In the prior art, an SP needs to apply to a service operator for each service to be implemented (for example, a service of sending a newspaper to a user through a multimedia message or a service of sending promotion shopping information to a user through a multimedia message), and set a corresponding SLA no matter whether the same SP applies for services of the same type.

However, it can be known from Table 1 that, in the embodiment of the present invention, a corresponding network capability product may be created for services of the same type to be implemented by the SP and each network capability product is set with a corresponding SLA. After the SP subscribes to the network capability product from the operator, when the SP implements a service, an access gateway of the SP only needs to obtain the network capability product and the SLA information that corresponds to the network capability product to authenticate the service to be implemented by the SP and no longer needs to concern whether the SP specifically implements, for example, the service of sending the newspaper to the user through the multimedia message, the service of sending the promotion shopping information to the user through the multimedia message, and so on.

FIG. 2 is a schematic diagram of an association relationship of a key data model according to an embodiment of the present invention. First, for a specific capability, a Product is created, which includes defining a Capability, affixing an SLA to the Capability, and affixing a fee to the Capability. After an SP subscribes to the Product from the operator, an association relationship between an SP ID and a Product ID is established in a Contract.

The method may further include: charging the SP according to the network capability product and the SLA information that corresponds to the network capability product.

102: Authenticate, according to the network capability product and the SLA information that corresponds to the network capability product, an SP that uses the network capability product for access.

Optionally, the authenticating, according to the network capability product and the SLA information that corresponds to the network capability product, the SP that uses the network capability product for access may include: if determining that the accessing SP has a network capability corresponding to the network capability product of the operator and the services provided by the SP falls within the range of the SLA information corresponding to the capability product, determining that the authentication is successful. In the prior art, each service applied for and implemented by an SP corresponds to an SLA respectively, and services of the same type that are implemented by different SPs correspond to different SLAs. However, in the embodiment of the present invention, each network capability product corresponds to an SLA. The services of the same type that are implemented by different SPs may also correspond to the same SLA, thereby greatly reducing the information amount of the set SLA.

103: Allow the SP to provide a service for a terminal user if the authentication is successful.

Optionally, the method may further include: transferring a fee charged from the terminal user to the SP when the terminal user uses the service provided by the SP. If the SP develops a new service based on a subscribed-to capability, it is unnecessary to perform complex configuration at a network side of the operator for service access, which simplifies the configuration process. In the solution of the embodiment of the present invention, a network capability (such as delivering a short message, delivering a multimedia message, and using a push message) is created to a unified product by an operator, and then the capability is set with an SLA for allocating to an SP. After purchasing the capability, the SP is capable of rapidly developing and operating a service and does not need to perform a lot of deployment configuration at a service level to ensure that the operator is capable of accessing the service, thereby improving the operating efficiency and reducing a waste of resources of a communication system.

### Embodiment 2

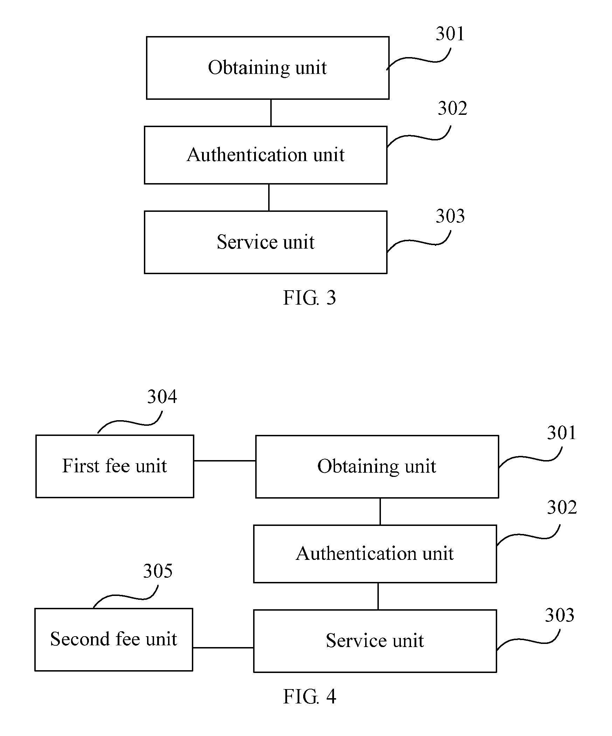

FIG. 3 is a schematic structural diagram of an access gateway according to an embodiment of the present invention. The access gateway includes:
an obtaining unit 301, configured to obtain a network capability product and service level agreement SLA information that corresponds to the network capability product;
an authentication unit 302, configured to authenticate, according to the network capability product and the SLA information that corresponds to the network capability product, an SP that uses the network capability product for access; and a service unit 303, configured to allow the SP to provide a service for a terminal user if the authentication unit performs the authentication successfully.

FIG. 4 is a schematic structural diagram of another example of access gateway according to an embodiment of the present invention. In addition to the obtaining unit 301, the authentication unit 302, and the service unit 303, the access gateway may further include a first fee unit 304, configured to charge the SP according to the network capability product and the SLA information that corresponds to the network capability product. The access gateway may further include a second fee unit 305, configured to transfer a fee charged from a terminal user to the SP when the terminal user uses the service provided by the SP.

Optionally, the authentication unit 302 may be further configured to determine that the authentication is successful when the accessing SP has a network capability corresponding to the network capability product and the service provided by the SP falls within the range of the SLA information corresponding to the network capability product.

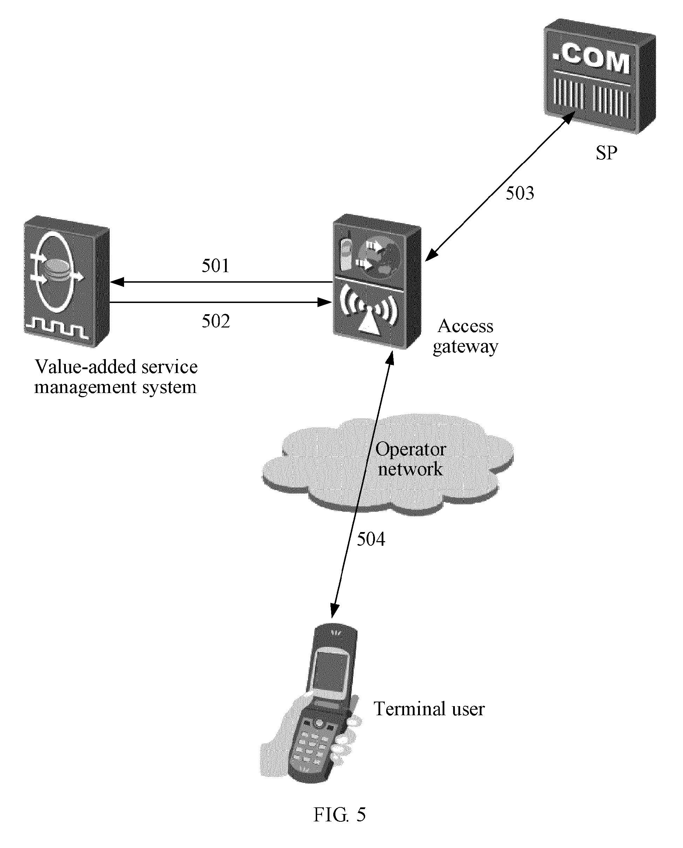

Optionally, the network capability product obtained by the obtaining unit 301 includes one or more of the following products: a capability product for sending a short message, a capability product for sending a multimedia message, a capability product for pushing a PUSH message, and a capability product for querying a terminal user current status. Definitely, the network capability product may also be a network capability product of another type, which is not limited by the embodiments of the present invention herein. The operator may use a "service management system" to uniformly perform, for example, model setting and management on the product, which is provided with functions of the following aspects: SP management, capability data management, capability-based product management, SLA setting, and contract maintenance performed after the SP subscribes to the capability product. FIG. 5 is a schematic diagram of a network layout of an access gateway according to an embodiment of the present invention. The embodiment of the present invention is implemented mainly by means of the following steps:
501: A service management system synchronizes capability information in a product subscribed to by the SP and an SLA set correspondingly to an access gateway. For example, the SP subscribes to a short message delivering capability product, the SLA is that 1000 SMSs (Short Messaging Service) are allowed to be delivered every day.
502: The access gateway receives the above configuration data and returns a response to the service management system after the synchronization is successful. It makes the subscription of the SP to the capability product to take effect officially.
503: The access gateway may allow the SP subscribing to the capability product to access and use the subscribed-to capability to deliver a service. In this process, the access gateway judges whether the SP has the capability, and judges whether the SP falls within the range of the SLA in the case that the SP has the capability. For example, in 501, if the SP delivers an MMS (Multimedia Messaging Service, multimedia information, also referred to as a "multimedia message"), while an SMS capability is subscribed to, the access gateway rejects the request; and if the SP delivers an SMS, but the delivery exceeds the range of the SLA, for example, it is the delivery of the 1001st message in a day, the request is rejected. A purpose of such a practice is that the SP may use as many capabilities as the SP has subscribed to.
504: In the case that the authentication is successful in 503, allow the SP to provide a service for a terminal user, so that the terminal user may use the service of the SP.

Since the access gateway only performs authentication control on the capability subscribed to by the SP, if the SP implements a new service based on the subscribed-to capability, it is unnecessary to perform a commissioning setting on service information and test the connectivity in the access gateway, thereby greatly saving communication resources, shortening the process of the SP implementing the service, and supporting the SP in developing a service more rapidly. Access authentication performed on the SP according to the subscribed-to capability takes the place of conventional access authentication performed on the service of the SP, thereby reducing stages of developing a new service by the SP and facilitating rapidly and conveniently developing and operating a service by the SP.

Persons of ordinary skill in the art should understand that all or a part of the steps in the methods according to the embodiments of the present invention can be implemented by a program instructing relevant hardware, and the program may be stored in a computer readable storage medium. When the program is run, all or a part of the steps are performed. The storage medium is such as a ROM/RAM, a magnetic disk, an optical disk, and so on.

The objectives, technical solutions, and beneficial effects of the present invention are described in further detail through the foregoing specific embodiments. It should be understood that the foregoing descriptions are merely specific embodiments of the present invention, but not intended to limit the protection scope of the present invention. Any modification, equivalent replacement, or improvement made without departing from the spirit and principle of the present invention should fall within the protection scope of the present invention.

## Claims

1. A service providing method, comprising:
obtaining, by an access gateway, a network capability product and service level agreement SLA information that corresponds to the network capability product;
authenticating, by the access gateway according to the network capability product and the SLA information that corresponds to the network capability product, a service provider SP that uses the network capability product for access; and
allowing, by the access gateway, the SP to provide a service for a terminal user if the authentication is successful.

2. The method according to claim 1, further comprising:
charging the SP according to the network capability product and the SLA information that corresponds to the network capability product.

3. The method according to claim 1, further comprising:
transferring a fee charged from the terminal user when the terminal user uses the service provided by the SP to the SP.

4. The method according to claim 1, wherein the authenticating, according to the network capability product and the SLA information that corresponds to the network capability product, the SP that uses the network capability product for access comprises:
determining that the authentication is successful if determining that the accessing SP has a network capability corresponding to the network capability product and the service provided by the SP falls within the range of the SLA information corresponding to the network capability product.

5. The method according to any one of claims 1 to 4, wherein:
the network capability product comprises one of the following: a capability product for sending a short message, a capability product for sending a multimedia message, a capability product for pushing a PUSH message, and a capability product for querying a terminal user current status.

6. An access gateway, comprising:
an obtaining unit, configured to obtain a network capability product and service level agreement SLA information that corresponds to the network capability product;
an authentication unit, configured to authenticate, according to the network capability product and the SLA information that corresponds to the network capability product, an SP that uses the network capability product for access; and
a service unit, configured to allow the SP to provide a service for a terminal user if the authentication unit performs the authentication successfully.

7. The access gateway according to claim 6, further comprising:
a first fee unit, configured to charge the SP according to the network capability product and the SLA information that corresponds to the network capability product.

8. The access gateway according to claim 6, further comprising:
a second fee unit, configured to transfer a fee charged from the terminal user when the terminal user uses the service provided by the SP to the SP.

9. The access gateway according to claim 6, wherein the authentication unit is further configured to determine that the authentication is successful if determining that the accessing SP has a network capability corresponding to the network capability product and the service provided by the SP falls within the range of the SLA information corresponding to the network capability product.

10. The access gateway according to any one of claims 6 to 9, wherein:
the network capability product obtained by the obtaining unit comprises one of the following: a capability product for sending a short message, a capability product for sending a multimedia message, a capability product for pushing a PUSH message, and a capability product for querying a terminal user current status.
